# EUROPEAN PATENT APPLICATION

(11) **EP 4 546 285 A1**
(43) Date of publication of application: **30.04.2025**
(21) Application number: 24207568.7
(22) Date of filing: 18.10.2024
(51) Int. Cl.: G06V 20/17, G06V 10/26, G06T 7/00, G06V 10/34, G06V 10/82, G06V 20/10, H02G 1/02

(54) **OVERHEAD POWER LINES AND PYLONS IDENTIFYING AND INSPECTION METHOD**

(30) Priority: 23.10.2023 CH 11712023
(71) Applicant: AXPO Grid AG, 5401 Baden (CH)
(72) Inventor: Stucki, Claudio, 8640 Rapperswil SG (CH); Niederer, Samuel, 8640 Rapperswil SG (CH); Badertscher, Hannes, 8640 Rapperswil SG (CH); Schuster, Guido, 8640 Rapperswil SG (CH); Lüthi, Bernhard, 8005 Zürich (CH); Arizzoli-Bulato, Lorenzo, 8005 Zürich (CH)
(74) Representative: Prins Intellectual Property AG

(57) **Abstract**

The disclosed invention consists of a method for identification and subsequent inspection of an overhead power line, with pylons (1), with conductor ropes (120) and insulators (14-14^{VI}) at the pylon (1), which is to be used in a simplified, reproducible and reliable way to identify and later control the pylons (1). This is achieved by process steps I) to V), wherein at least steps III) and IV) are performed by a pre-trained AI-based model, wherein a grouping step, several processing steps and a matching step are performed.

V) defect detection of the power line pylon (1) and mapping of the detected defects to the digital twin is performed either by a person and/or software-supported in the database of the service provider and subsequently damaged spots can be transmitted to the service provider and/or network operator for repair.

## Description

### TECHNICAL FIELD

The present invention describes a method for identification and subsequent inspection of overhead power lines and pylons, with conductor ropes and insulators at the pylon.

### STATE OF THE ART

Inspection of critical power infrastructure, especially of high-voltage grids of a grid operator, is more important today than ever before, with ever-increasing demands on power grids and severe component obsolescence.

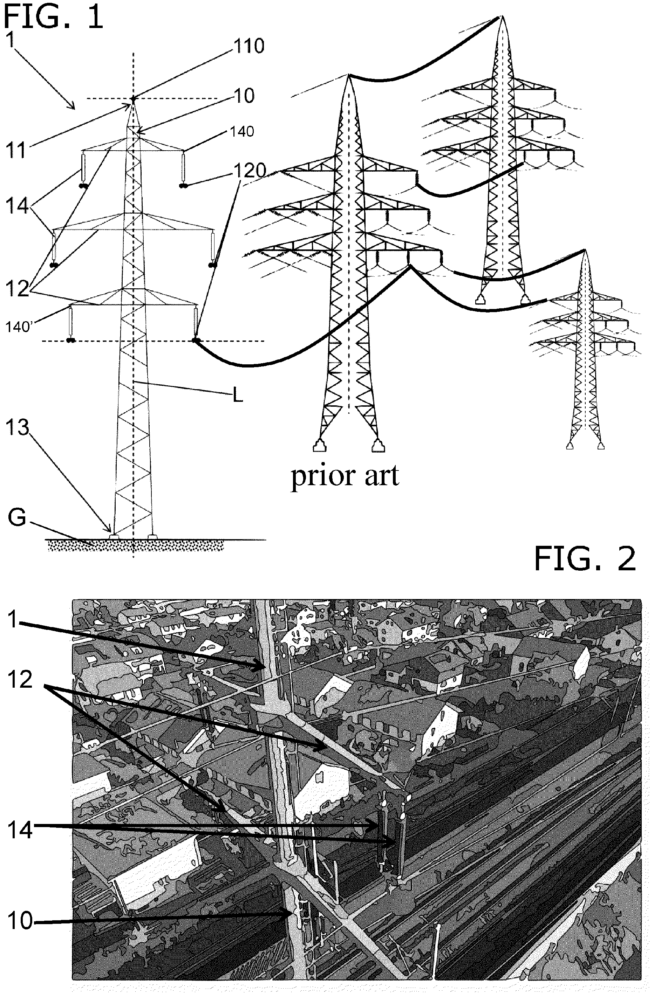

The focus here is on the inspection of overhead line pylons 1 or power line pylons 1 as a mast structure which carries at least one current-carrying conductor rope 120, subjected to a high or maximum voltage of more than 50kV. Such a power line pylon 1 is shown in Figure 1 in detail, as part of power grid as known from the state of the art and can be used as a supporting mast, a guyed mast, a branch mast or a cable terminal mast, whereby adjacent power line pylons 1 conduct or distribute alternating current, for example between switchgear. In the course of the power line pylon 1 along its longitudinal pylon axis L, a lightning protection crossbar 11 with an earth cable 110 is arranged at the top of the pylon structure 10 and three conductor rope crossbars 12 of different widths with two conductor ropes 120 per conductor rope crossbar 12. Power line pylons 1 can have a metallic, concrete or wooden structure 10, in particular if made of steel in the form of a steel lattice mast.

A pylon base 13 is usually formed of concrete. On such a power line pylon 1, the lightning protection crossbar 11 with at least one ground cable 110 or lightning protection cable 110 is arranged at its end facing away from the ground G. The at least one ground cable 110 is electrically conductively connected to the grounded pylon structure 10. However, the ground cable 110 may also be attached above an uppermost conductor rope cross member 12, at the top of the conductor rope cross member 12. In order to act as a lightning protector, the ground cable 110 must be located above the conductor rope cross member 12 and preferably above the top of the power line pylon 1. Furthermore, the overhead power line pylons 1 have at least one conductor rope crossbar 12, by means of which the electrically conductive conductor rope 120 is held at a distance from the grounded pylon structure 10. Here, as usual, insulators 14 are also arranged between the conductor rope crossbars 12 and the conductor ropes 120, connected at insulator suspension points 140, forming insulator chains, which additionally ensure that the conductor ropes 120 cannot come into contact with the pylon structure 10, so that short circuits or earth faults are avoided.

The inspection of the power line pylons 1 and all components must take place regularly and has so far been carried out manually by appropriate maintenance personnel. This involves a visual inspection on site of the power line pylon 1 together with the insulators 14 and adjacent conductor ropes 120 by several people. The evaluation of possible damage is also carried out by the personnel, and this is reported accordingly to a control center of the grid operator for later repair.

In order to simplify the inspection and make it more reliable, digitalization has also been used recently and the individual power line pylons 1 are also visually inspected on site using drones. Recorded images can then also be additionally checked at the control center of the grid operator with a time delay and evaluated again and archived later. However, the recorded measurement results are still forwarded and evaluated by personnel, which takes time and is prone to errors and cannot be automated.

### DESCRIPTION OF THE INVENTION

The present invention has set out to provide an automatic, reliable, reproducible, and largely human-independent identifying and inspection method of overhead power lines and power line pylons at their location.

This task is solved by the method of claim 1, wherein geographic data and captured image data of a power line pylon are assigned to a digital twin model and can be retrieved from a database, wherein such data are created and evaluated from time to time, relying on trainable artificial intelligence algorithms, to identify the power line pylon, before checking for anomalies and defects and therewith inspecting the power line pylon.

This method presented here and offered by a service provider is ideal for grid operators who can extremely simplify and accelerate their inspection processes, needing geographic data, a digital twin model and captured image data only.

### BRIEF DESCRIPTION OF THE DRAWINGS

Further understanding of various aspects of the invention can be obtained by reference to the following detailed description in conjunction with the associated drawings, which are described briefly below.

It should be noted that in the differently described embodiments, the same parts are provided with the same reference symbols or the same component names, the disclosures contained in the entire description being able to be applied analogously to the same parts with the same reference symbols or the same component symbols.
- FIG. 1: shows a schematic view of several overhead power lines and pylons with conductor ropes according to the state of the art.
- FIG. 2: is an example of a camera image of a power line pylon with surroundings, taken by a drone for inspection of the power line pylon.
- FIG. 3: shows a schematic illustration of a power line pylon that is being inspected by a drone, whereby only absolutely necessary data need to be recorded and processed for later evaluation.
- FIG. 4: shows a schematic diagram of a power line pylon with insulator chain arranged on a conductor rope crossbar, exemplified by six insulators.
- FIG. 5a: for another insulator group photo, on the upper left side a representation after preprocessing step of all layers together is shown, while the data of the S-layer, M-layer and L-layer are also shown separately in the other three images, while
- FIG. 5b: shows on the upper left side a representation after processing step of all layers together, while the data of the S-layer, M-layer and L-layer are also shown separately in the other three images, while
- FIG. 5c: shows on the upper left side a representation after postprocessing step of all layers together, while the data of the S-layer, M-layer and L-layer are also shown separately in the other three images.
- FIG. 6: shows an overview representation of the process described in claim 1.

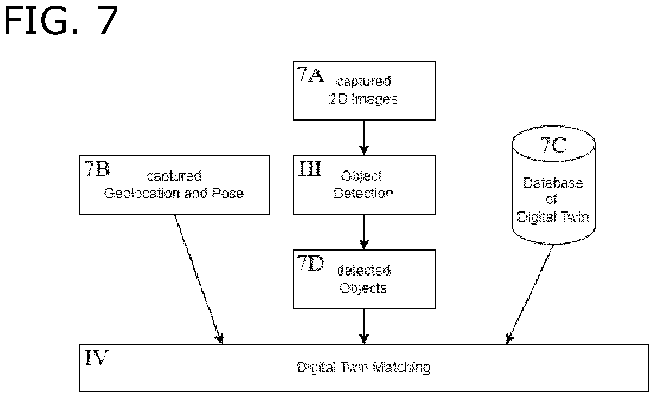

- FIG. 7: shows a graphical representation of the Digital Twin Matcher method.

### DESCRIPTION

Here, a method for identification and subsequent inspection of overhead power lines and pylons 1 is presented, which comprises:
I) Image acquisition with drones or helicopters,
   capturing 2d images 7A of overhead power lines and pylons 1, in particular of the insulators 14-14^{VI} and/or insulator groups A, including camera geolocation and pose 7B,
II) forwarding captured 2d images 7A and camera geolocation and pose 7B to a server and
   performing
III) AI-based object detection on the captured 2d images 7A based on convolutional neural network on a server resulting in detected objects 7D,
   before
IV) an object to digital twin matching step is performed on the server, mapping detected objects 7D, in particular the insulators 14-14^{VI} and/or insulator groups A of the captured 2d images 7A and camera geolocation and pose 7B with in a database 7C of the service provider previously stored digital twins of overhead power lines and pylons 1,
   before a final
V) defect detection of overhead power lines and pylons 1 on the captured 2d images 7A and mapping of detected defects to the digital twin in the database of digital twins 7C is performed either by a person and/or software-supported, and the detected defects are stored in the database of the service provider and/or are transmitted to the service provider and/or network operator for repair.

With known and defined camera properties and the approximate camera position and pose 7B during image acquisition, object suspension points 140 and 141 (3D points, which are virtual points between different insulators, if any) can be projected onto the 2D image plane with the perspective mapping. Due to inaccuracies of the camera properties, the camera position, the camera orientation as well as the object suspension points (3D points), the calculated image points only partially match the captured image. For this purpose, our «Digital Twin Matcher»-method is developed, which matches the expected image positions with the recorded image.

This entire process is referred to as «Digital Twin Matcher» which maps a power line pylon 1 to its stored digital twin and can thus identify the power line pylon 1 before checking for damage to the power line pylon 1 based on the captured images 7A.

A service provider offering software for the «Digital Twin Matcher» method described here and provides a database with digital twins of power line pylons 1 previously stored including the actual state of the individual parts of defined power line pylons 1 of the digital twins, so that at least a part of the overhead power lines and pylons 1 of the power grid of the network operator are stored and retrievable as digital twins in the database 7C.

This database with digital twins 7C of overhead power lines and pylons 1 must have been created once in advance by the service provider so that newly captured and analyzed images can be assigned to digital twins accordingly and damaged spots can be specifically transmitted to the service provider and/or network operator for repair after they have been found. All data transfer can be carried out as is sufficiently known to the person skilled in the art today. The security of the data or the unauthorized extraction of the data must be ensured.

To automate, simplify and improve the monitoring of overhead power lines and pylons 1, images respectively videos were taken by a drone in step I. A multiplicity of images is taken of power line pylons 1 as depicted as an example in figure 2.

Although houses, roads, railroad tracks, or other natural or man-made objects are visible in the images, conductor rope crossbar 12, insulator 14, insulator groups and other components of pylon structure 10 can be captured by the camera in multiple images. From the images, it must later be possible not only to recognize damaged areas, but also to identify the power line pylons 1 and its components.

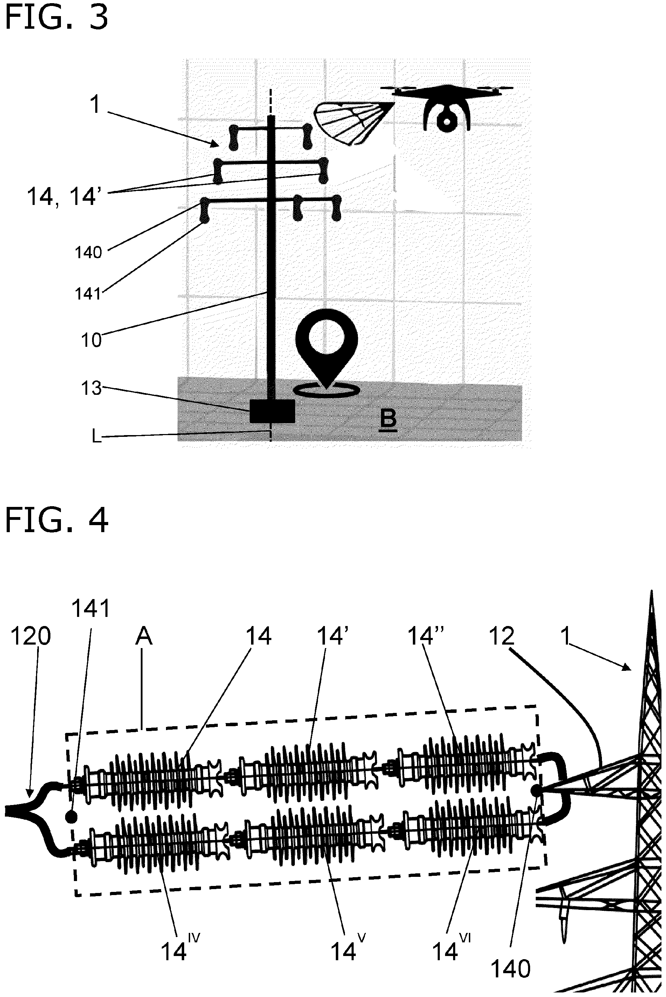

As schematically shown in figure 3 the drone flies to several predefined positions in an area around the power line pylons 1. The process also works with manually captured images and data. The camera attached to the drone orientates itself in the predefined direction and captures images at each position of the area of the power line pylons 1. The objects visible in the captured 2d images 7A, e.g. insulator 14, 14', power line pylons 1, pylon structure 10, insulator suspension point 140, insulator end point 141, are localized with actual georeferenced data, like GPS data, to be later matched with a digital twin in a database 7C of a software service provider with our following «Digital Twin Matcher» method.

Important parts of the power line pylons 1 are abstractly stored in a so-called digital twin model. For example, the insulators 14 as objects are of particular interest. In the digital twin model, the 3d coordinates of the insulator suspension points 140, between the conductor rope 120 and the insulator end points 141 for each insulator 14 found and more can be stored as 3d coordinates in the digital twin database 7C. However, this data does not indicate whether a single insulator or an entire insulator group is installed between the two suspension points 140, 141, making a 1-to-1 matching between the digital twin and objects found on an image impossible. Finding insulator groups on 2d images and matching these to the digital twin is a difficult task.

The captured images 7A are sent via known technical means from the camera to a server of the service provider in a forwarding step II. By server is meant any type of computer on which the AI model or the algorithms and neural networks are programmed and can run. Object detection III takes place on the server, which can be designed in different versions as known to the skilled person, after image acquisition and image data were send.

On the captured 2d images 7A, a neural network based or AI model object detector in the object detection III on the server is used to search for the insulators 14 respectively the power line pylons 1 respectively later damaged areas to be identified.

The insulators 14-14^{VI} will be localized on the captured 2d image 7A and the detection quality is indicated with a score. The neural network, usually a convolutional neural network, is trained on single insulators 14 to be independent from the size of the insulator chains or groups A. Each insulator 14-14^{VI} is found separately and marked.

In further processing steps, whole insulator groups A are found as marked with the dotted line rectangle in Figure 4 and in the following explained in detail.

To group the found insulators 14-14^{VI}, a multi-layer approach with at least three layers should be used. The insulators 14-14^{VI} found on the image by the object detection III are assigned to different layers S, M, L. The grouping process using three processing steps:
A) layer-independent preprocessing:
   - assign cluster bounding boxes into different layers S, M, L using the k-means clustering algorithm,
   - Generate binary mask of each layer S, M, L for each found insulator 14-14^{VI},
B) per-layer processing:
   - Apply morphological operation closing on each layer independently,
   - Discover individual regions and individually enclosed by its convex hull on each layer,
   - Check for misclassifications in step A) between adjacent layers eliminating found misclassifications as follows:
      First find overlapping regions between adjacent layers and the insulators 14-14^{VI} and insulator groups A corresponding to the overlapping regions and,
      second assign insulators 14-14^{VI} and insulator groups A corresponding to an overlapping region to a different layer, wherein insulators 14-14^{VI} and insulator groups A overlapping with regions from a larger layer are moved to the larger layer, while insulators 14-14^{VI} and insulator groups A overlapping with a smaller layer are moved to the smaller layer.
C) layer-independent post-processing:
   - Check for misclassification in the border regions of the 2d images and eliminate found misclassifications by assigning misclassified insulators 14-14^{VI} and insulator groups A to a different layer,
   - Remove insulator groups A with a single insulator 14 when their confidence score is below a threshold,
   - Calculate bounding box and center point of each insulator group A.

The number of layers depends on the number of detected insulators 14-14^{VI}. There are three layers in case of more than 15 insulators, two layers in case of 3 to 14 insulators and a single layer in case of less the 3 insulators. This partition allows to distinguish large insulators 14 in the foreground of a captured 2d image 7A from small insulators 14' in the background of a captured image 7A.

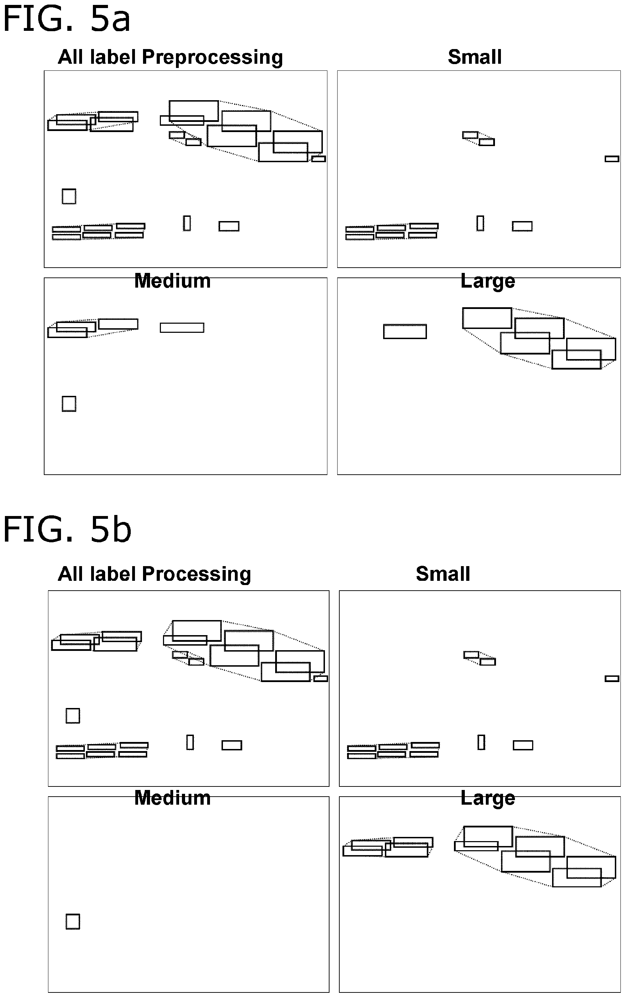

As another example, the concretely implemented grouping steps for another recorded image are shown in Figures 5a to 5c.

Each of these layer S, M, L are converted into a binary mask. Regions in this mask representing insulators 14-14^{VI} are marked by a solid black line. Using the morphological operation closing, neighboring regions are combined into a single region, marked with dotted lines. This is done with a flat, line-shaped structuring element. A similar structuring element such as a square / rectangular / round structuring element could also be used. The size of this structuring element depends on the layer it is applied to. The structuring element shape, size and orientation are dynamically calculated for each layer based on the insulators assigned to this layer. On each layer S, M, L, the structuring element size is calculated as a constant scaling factor times the L2 norm of the cluster center obtained from the k-means clustering.

Additionally, a second structuring element can be used to merge double-chained/multi-chained insulators 14-14^{VI} into a single group. This second structuring element has the half length of the main structuring element and is rotated by 90°.

All predicted insulator regions must be examined for misclassifications. It can happen that certain insulators 14-14^{VI} have been found incompletely for various reasons and have therefore been assigned to the wrong layer L. Each found group from the middle layer M is examined individually for overlapping regions with the large layer L and afterwards with the small layer S. If an overlap occurred, the group is moved from the middle layer to the corresponding layer.

After preprocessing and processing step, the layer look like depicted in Figure 5b. Further misclassifications occur in the border regions, where even partly visible insulators 14 are detected by the object detection algorithm III. The dimensions of the bounding boxes of these partly visible insulators are small, which can lead to a misclassification into a smaller layer. To avoid this problem all insulators in the small layer with a distance less than a certain number of pixels to the border are investigated. If there is an overlapping part of this object with an object in the large layer L, the membership of this object is changed to the large layer L.

In most of the cases the groups are expected to consist of several individual insulators 14-14^{VI}. In cases of a group with only a single insulator 14 object, the confidence score of the detected insulator 14 from the object detection algorithm III must be at least 0.80, otherwise this group is removed.

Finally, the bounding boxes and center points of each of the found insulator groups are calculated. Each found insulator group A, A', A", A‴ is assigned to a unique group ID so each individual insulator 14 can be uniquely assigned to the insulator group A, A', A", A'". This concept allows to combine the individual bounding boxes of the object detection III) to insulator groups A, A', A", A‴ in the best feasible way. Those insulators 14 having a low score and not assigned to an insulator group A, A', A", A‴ will be removed. Furthermore, it is even possible to detect supposedly overlapping insulator groups A and A‴ separately.

The matching step IV of the «Digital Twin Matcher» is to assign the found insulator groups A, A', A", A‴ to the assets in the digital twin. The basics for this are provided by the theoretical calculation of the insulator suspension points 140 and the insulator end points 141 on the images.

This calculation is done with the projection mapping of the 3d points onto the 2d image plane. Using
the geolocation data (e.g. GPS coordinates) of the image acquisition position,
the orientation of the camera and
the camera properties it is possible to calculate the expected position of the 3d insulator suspension points 140 and insulator end points 141 on the image.

The calculated 2d points suffer from various errors and uncertainties, making the digital twin matching process IV challenging. Inaccurate geolocation data (e.g. GPS coordinates), as well as inaccurate orientations of the camera lead to inaccurate extrinsic camera parameters. As a periodic high-precision calibration of the used camera is not feasible, further uncertainties (intrinsic parameters and lens distortion) lead to an even more inaccurate camera matrix. The consequences of these inaccuracies and uncertainties are a translational displacement and a distortion of the projected insulator suspension points 140 and insulator end points 141.

Nevertheless, the projected insulator suspension points 140 and insulator end points 141 on the 2d image constitute the basic information to assign the insulators groups A, A', A", A‴ with the digital twin. Using an assignment algorithm, here Munkres-Algorithm, allows to assign the found insulator groups A, A', A", A‴ to the predicted insulator suspension points 140 and insulator end points 141 in the image. The algorithm optimizes the assignment using a profit matrix. In cases of bad profits, the algorithm can relinquish an assignment. This allows incorrectly formed insulator groups A, A', A", A‴ to be eliminated in this matching step.

Briefly the matching step includes:
- Estimate 3d suspension points on the 2D image plane
- Calculate profit matrix
- Run assignment algorithm

Once the digital twin matching process IV is successfully done, the captured 2d images 7A can be used to locate faults and damaged areas on the power line pylon 1 and its components and initiate repairs if necessary.

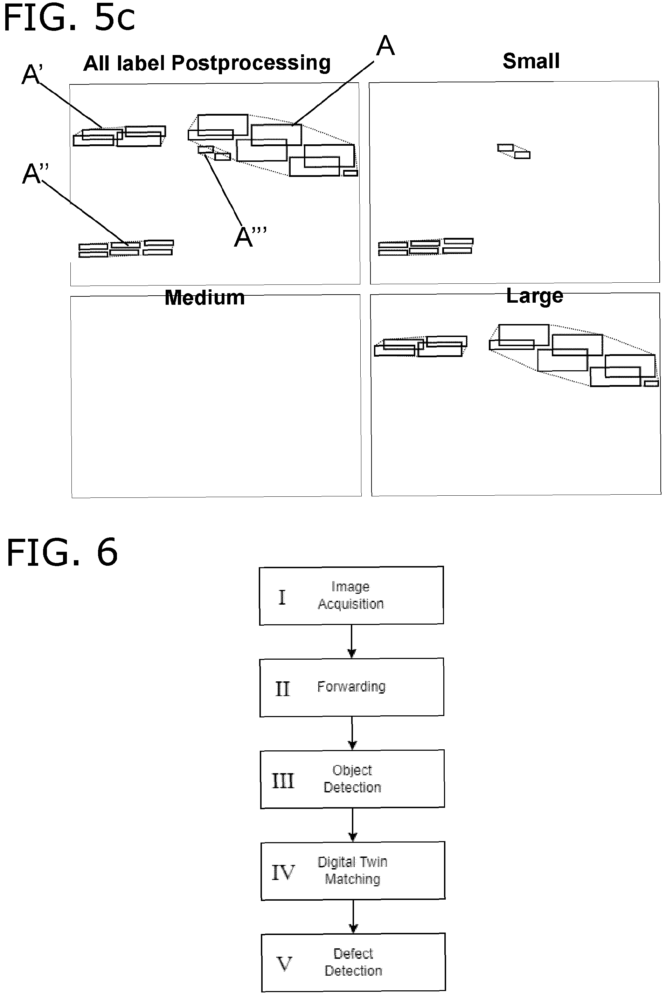

The developed identifying and inspection method of the «Digital Twin Matcher» allows to automatically assign detected insulators 14-14" of power line pylon 1 to the objects in the database of the digital twin 7C of the power line pylon 1. The concept is unaffected by the actual number of single insulators 14-14" between the suspension point 140 and the insulator end point 141, thus working with simple digital twin Models in the database 7C. The assignment can be done with the predicted insulator group (regions marked with dotted lines in Fig. 5c) and the theoretical 3d insulator suspension points 140 and insulator end points 141 projected on the image plane, even in case of multiple parallel conductor ropes 120, where the suspension points 140 are purely fictitious.

Thanks to the multi-layer process it is possible to detect supposedly overlapping insulator groups A, A', A", A‴ separately. Furthermore, this concept can handle uncertainties in the geolocation data (e. g. GPS-coordinates) of the image capturing position, inaccurate orientations of the camera during capturing the image, uncertainties of the camera properties and uncertain insulator suspension points 140 and insulator end points 141 as 3d coordinates.

Defect detection step V of the power line pylons 1 and mapping of the detected defects to the digital twin is performed either by a person and/or software-supported in the database of the service provider and subsequently damaged spots can be transmitted to the service provider and/or network operator for repair. The software-supported defect detection of overhead power lines and pylons 1 on the captured images 7A is based on a neural network, wherein the neural network is trained on a multitude of 2d images of objects without defects and therefore detects anomalies.

In our «Digital Twin Matcher» method, only certain key points have to be known, and in addition, the model is robust with respect to inaccuracies in the digital twin (e.g., inaccuracies from using a LIDAR measurement as digital twin instead a known true digital twin).

As only few points, less than 20 points or around 15 points per power line pylons 1 have to be included in the digital twin, creating a digital twin model for existing installations is easy and fast, compared to creating a full surface model.

Our «Digital Twin Matcher» method does not require exactly known camera positions and orientations of the camera, shooting images. Instead, only an inaccurate guess is taken as starting point, and the matching between 3d and 2d is robustly done by first grouping the insulators 14-14ⁿ, without knowledge of the true positions of the insulators 14-14" and the cameras, and subsequent performing an optimal matching between the found insulator groups A, A', A", A‴ and the digital twin using a special matching algorithm, in particular the Munkres matching algorithm, sometimes also named Kuhn-Munkres algorithm.

The detection of objects III, such as insulators 14 or its defects in defect detection V, such as cracks using software always leads to a few wrong classifications: either a defector object that is present is not found by the algorithm (false negative), or the algorithm returns defects or objects that do not exist in reality (false positive).

We are handling these cases.

Due to the grouping step, our «Digital Twin Matcher» method is robust to both false negatives, if e.g., one insulator 14 in a group A is missing, the group A is still matched correctly and false positives, if additional insulators 14' are found by the algorithm, these will not be wrongly matched to the digital twin.

Our «Digital Twin Matcher» method incorporates the inaccuracies of the camera, the digital twin model and the algorithms into the matching process.

Here, we prefer to use a convolutional neural network architecture for object detection and/or object segmentation, which is trained on a dataset of training images to detect and/or segment overhead power lines and pylons 1 with conductor ropes 120, insulators 14-14^{VI} and/or insulator groups.

Of course, all stored data on the server of the service provider and/or the grid operator are stored securely in accordance with the Data Protection Act and are only accessible to authenticated users. The data of the digital twins can be made accessible with known means in a cloud, for example. A person of the grid operator or service provider can thus gain online access to the recorded images and the data of the digital twins, and thus to any defects found.

Although the invention herein has been described with reference to particular embodiments, it is to be understood that these embodiments are merely illustrative of the principles and applications of the present invention. It will be apparent to those skilled in the art that various modifications and variations can be made to the method of the present invention without departing from the spirit and scope of the invention. Thus, it is intended that the present invention include modifications and variations that are within the scope of the appended claims and their equivalents.

### LIST OF REFERENCE NUMERALS

1 power line pylon (real)
10 Pylon structure
11 Lightning protection crossbar
   110 Earth cable
12 conductor rope crossbar
   120 conductor rope
13 Pylon base
14 Insulator
   140 insulator suspension point
   141 insulator end point
A insulator chain or group
L Longitudinal axis of pylon
G ground
I Image Acquisition
II Forwarding
III Object Detection
IV Digital Twin Matching
V Defect Detection
7A captured 2D images
7B captured geolocation and pose
7C database of digital twins
7D detected objects

## Claims

1. Method for identification and subsequent inspection of overhead power lines and pylons (1), with conductor ropes (120) and insulators (14-14^{VI}) at the pylon (1),
**characterized in the steps:**
I) image acquisition with drones or helicopters, capturing 2d images (7A) of the overhead power lines and pylons (1), in particular of the insulators (14-14^{VI}) and/or insulator groups (A), including camera geolocation and pose (7B)
II) forwarding captured 2d images (7A) and camera geolocation and pose (7B) to a server,
III) AI-based object detection on the captured 2d images (7A) based on at least one neural network on a server resulting in detected objects (7D),
before
IV) an object to digital twin matching step is performed on the server, mapping detected objects (7D), in particular the insulators (14-14^{VI}) and/or insulator groups (A) of the captured 2d images (7A) and camera geolocation and pose (7B) with in a database (7C) of the service provider previously stored digital twins of overhead power lines and pylons (1),
before a final
V) defect detection of overhead power lines and pylons (1) on the captured 2d images (7A) and mapping of detected defects to the digital twin in the database of digital twins (7C) is performed either by a person and/or software-supported, and the detected defects are stored in the database of the service provider and/or are transmitted to the service provider and/or network operator for repair.

2. Method for identification and subsequent inspection of overhead power lines and pylons (1) according to claim 1, wherein step (III) AI-based object detection (III) based on at least one neural network on a server is comprising at least one additional grouping process.

3. Method for identification and subsequent inspection of powerlines and pylons (1) according to claim 2, wherein the grouping process after object detection in step (III) is comprising a multiplicity of different processing steps for obtaining the group (A) of imaged insulators (14-14^{VI}) from the captured 2d images (7A).

4. Method for identification and subsequent inspection of overhead power lines and pylons (1) according to one of the preceding claims, wherein the image acquisition (I) captures one or multiple images at one or multiple locations and/or camera settings, wherein the locations and camera settings are calculated from previously captured 2d images (7A), geolocation and pose (7B), detected objects (7D) and/or database (7C) of the stored digital twins.

5. Method for identification and subsequent inspection of overhead power lines and pylons (1) according to one of the preceding claims, wherein the matching (IV) comprises at least:
- estimation of 3D suspension points (140) on the 2D image plane,
- calculation of profit matrix and finally
- performing an assignment algorithm to identify insulators (14-14^{VI}) and insulator groups (A) and therewith digital twins.

6. Method for identification and subsequent inspection of overhead power lines and pylons (1) according to one of the preceding claims, wherein less than 20 points per digital twin of each pylon (1) are required for the matching step (IV), wherein the required points comprise the insulator end points (141) and insulator suspension points (140) of each installed insulator (14-14VI) or insulator group (A).

7. Method for identification and subsequent inspection of overhead power lines and pylons (1) according to claim 2, wherein the additional grouping process of found insulators (14-14^{VI}) is done with a multi-layer approach with at least three layers, namely a small layer (S), a medium layer (M) and a large layer (L), wherein each found insulator (14-14^{VI}) is assigned to at least one of the layers, based on the bounding box size of the found insulator (14-14^{VI}).

8. Method for identification and subsequent inspection of overhead power lines and pylons (1) according to claim 2 or claim 7, wherein the additional grouping process comprises three steps:
a layer-independent preprocessing, a per-layer processing and a layer-independent postprocessing, wherein each step comprises one or multiple computational steps.

9. Method for identification and subsequent inspection of overhead power lines and pylons (1) according to claim 2 or 7 or 8, wherein the additional grouping process in the object detection (III) is performed as follows:
A) layer-independent preprocessing:
- assign cluster bounding boxes into different layers using the k-means clustering algorithm,
- Generate binary mask for each found insulator (14-14^{VI}),
B) per-layer processing:
- Apply at least one morphological operation on each layer independently,
- Discover individual regions and individually enclosed by its convex hull on each layer,
- Check for misclassifications between adjacent layers and eliminate found misclassifications by assigning misclassified insulators (14-14^{VI}) and insulator groups (A) to a different layer
C) layer-independent post-processing:
- Check for misclassification in the border regions of the 2d images and eliminate found misclassifications by assigning misclassified insulators (14-14^{VI}) and insulator groups (A) to a different layer,
- Remove insulator groups (A) with a single insulator (14) when their confidence score is below a threshold,
- Calculate bounding box and centre point of each insulator group (A).

10. Method for identification and subsequent inspection of overhead power lines and pylons (1) according to claim 9, wherein the at least one morphological operation in B) applied on each layer is performed as follows:
- A sequence of at least one morphological closing operation is applied
- a flat, line-shaped structuring element is used,
- the size of the structuring element is calculated per layer based on the size of the bounding boxes of the insulators assigned to this layer,
- the orientation of the first structuring element is calculated from the expected orientation, based on the digital twin.
- the size and orientation of the second structuring element is calculated from the size and orientation of the first structuring element, by rotating by 90° and scaling with a constant scaling factor.

11. Method for identification and subsequent inspection of overhead power lines and pylons (1) according to claim 9 or 10,
wherein checking for misclassifications in step B) between adjacent layers eliminating found misclassifications is performed as follows:
- Find overlapping regions between adjacent layers and the insulators (14-14^{VI}) and insulator groups (A) corresponding to the overlapping regions and
- Assign insulators (14-14^{VI}) and insulator groups (A) corresponding to an overlapping region to a different layer, wherein insulators (14-14^{VI}) and insulator groups (A) overlapping with regions from a larger layer are moved to the larger layer, while insulators (14-14^{VI}) and insulator groups (A) overlapping with a smaller layer are moved to the smaller layer.

12. Method for identification and subsequent inspection of overhead power lines and pylons (1) according to one of the preceding claims, wherein the AI-based object detection on the captured 2d images (7A) based on at least one neural network is a convolutional neural network architecture for object detection and/or object segmentation, which is trained on a dataset of training images to detect and/or segment overhead power lines and pylons (1) with conductor ropes (120), insulators (14-14^{VI}) and/or insulator groups.

13. Method for identification and subsequent inspection of powerlines and pylons (1) according to one of the preceding claims, wherein the defect detection (V) of overhead power lines and pylons (1) on the captured 2d images (7A) is based on at least one neural network, wherein at least one of the neural networks is trained on a multitude of 2d images of objects without defects and therefore detects anomalies.
